# EUROPEAN PATENT APPLICATION

(11) **EP 1 731 793 A1**
(43) Date of publication of application: **13.12.2006**
(21) Application number: 05728919.1
(22) Date of filing: 31.03.2005
(51) Int. Cl.: F16G 5/18, F16H 9/24

(54) **POWER TRANSMISSION CHAIN AND POWER TRANSMISSION DEVICE**

(30) Priority: 31.03.2004 JP 2004105933
(71) Applicant: JTEKT CORPORATION, Chuo-ku Osaka-shi Osaka 542-8502 (JP)
(72) Inventor: KAMAMOTO, Shigeo, c/o JTEKT Corporation, Osaka-shi, Osaka 542-0081 (JP); YASUHARA, Shinji, c/o JTEKT Corporation, Osaka-shi, Osaka 542-0081 (JP); KITAMURA, Kazuhisa, c/o JTEKT Corporation, Osaka-shi, Osaka 542-0081 (JP)
(74) Representative: Steil, Christian
(86) International application number: PCT/JP2005/006804
(87) International publication number: WO 2005/095823

(57) **Abstract**

A power transmission chain (1) includes a plurality of link units (51, 52, and 53) aligned in the traveling direction (X1) of chain, and a plurality of connecting members (50) that link these link units (51, 52, and 53) to one another. Each link unit (51, 52, and 53) includes a plurality of links (2) aligned in the width direction (W1) of chain. Each connecting member (50) includes first and second power transmission members (3 and 4). Either one of the first and second power transmission members (3 or 4) moves accompanying bending of the chain (1) while coming into contact with the other power transmission member in a contact state including at least one of rolling contact and sliding contact. The number of the links (2) in each link unit (51, 52, and 53) is equal and an even number.

## Description

### Technical Field

The present invention relates to a power transmission chain and a power transmission device including the same.

### Background Art

An endless power transmission chain used in a power transmission device, such as a CVT (Continuously Variable Transmission) in an automobile, generally includes a plurality of link units aligned in the traveling direction of chain. Each link unit includes a plurality of links aligned in a direction orthogonal to the traveling direction of chain. The link units adjacent to each other in the traveling direction of chain are linked to each other in a manner so as to enable bending via a pair of pins that come into rolling contact with each other (for example, see Japanese Unexamined Utility Model Publication No. 64-15840).

There has been a request for such a power transmission chain to improve the strength and the durability, and further, a reduction in size is needed in order to increase the degree of flexibility as to the location with respect to a vehicle body or the like.

The present invention therefore has an object to provide a power transmission chain not only capable of enhancing the strength and the durability but also capable of achieving a reduction in size, and a power transmission device including the same.

### Disclosure of the Invention

In order to achieve the above objects, a preferred aspect of the present invention provides a power transmission chain that includes a plurality of link units aligned in a traveling direction of chain, and a plurality of connecting members that link the plurality of link units to one another. Each link unit includes a plurality of links aligned in a width direction of chain that is orthogonal to the traveling direction of chain. Each connecting member includes first and second power transmission members. Either one of the first and second power transmission members moves relatively with respect to the other power transmission member accompanying bending of the chain while coming into contact with the other power transmission member in a contact state including at least one of rolling contact and sliding contact. The number of the links in each link unit is equal and an even number.

In a conventional power transmission chain of such type, no consideration has been given to a difference of the numbers of links among the respective link units, and the numbers of the links in the respective link units are not equal. Consequently, in the link unit comprising the least number of links, stress on the links included in this link unit tends to be higher than stress on the links of other link units. Meanwhile, in the link unit comprising the largest number of links, the links included in this link unit are used at excessively low stress. The chain therefore has an extra space in the width direction of chain, which increases the device in size.

On the contrary, according to the aspect of the present invention, because the number of the links in each link unit is made equal, stress induced on the links of each link unit is made almost uniform, which makes it possible to prevent the occurrence of bias of stress among the link units. It is thus possible to enhance the strength and the durability markedly. Moreover, because the number of the links in each link unit is made equal, no link in a particular link unit will protrude in the width direction of chain, which enables a size reduction of the device to be achieved.

### Brief Description of the Drawings

FIG. 1 is a partially broken perspective view schematically showing the configuration of a major portion of a chain-type CVT as a power transmission device including a power transmission chain according to one embodiment of the present invention.
FIG. 2 is a partially enlarged cross section of a drive pulley (driven pulley) and the power transmission chain of the chain-type CVT shown in FIG. 1.
FIG. 3 is a perspective view schematically showing the configuration of a major portion of the power transmission chain.
FIG. 4 is a sectional plan view of the major portion of the power transmission chain.
FIG. 5 is a cross section taken along the line V-V of FIG. 4.
FIG. 6 is a schematic view of a power transmission chain according to another embodiment of the present invention.
FIG. 7 is a cross section of a major portion of the power transmission chain according to still another embodiment of the invention.

### Best Mode for Carrying Out the Invention

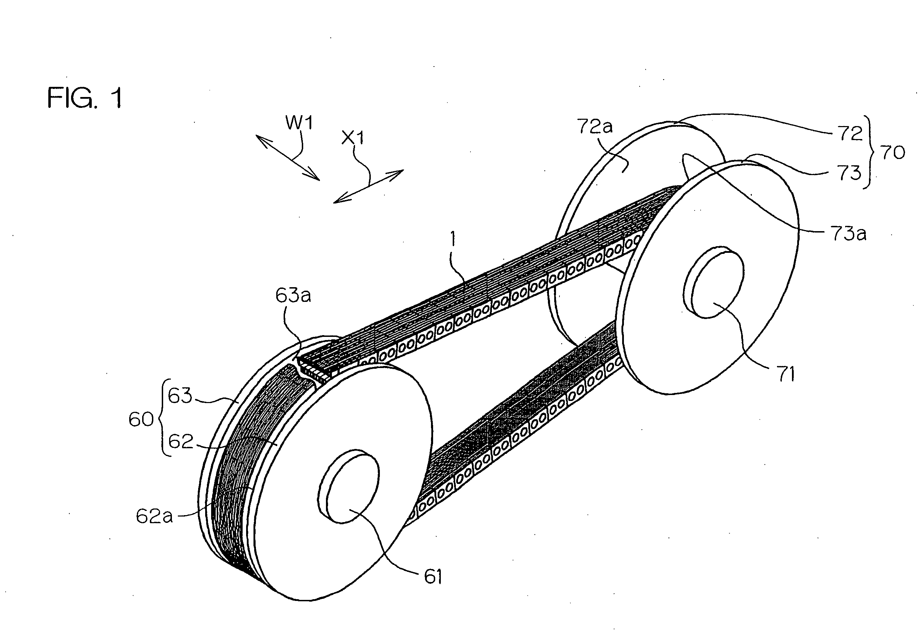

FIG. 1 is a partially broken perspective view schematically showing the configuration of a major portion of a chain-type CVT (hereinafter, referred to simply as the CVT on occasion) as a power transmission device including a power transmission chain according to one embodiment of the present invention.

Referring to FIG. 1, a present CVT 100 is incorporated into a vehicle, such as an automobile. The CVT 100 includes a drive pulley 60 made of metal (structural steel or the like) as a one in a pair of pulleys, a driven pulley 70 made of metal (structural steel or the like) as the other pulley in the pair, and an endless power transmission chain 1 (hereinafter, referred to simply as the chain on occasion) wound across a pair of these pulleys 60 and 70.

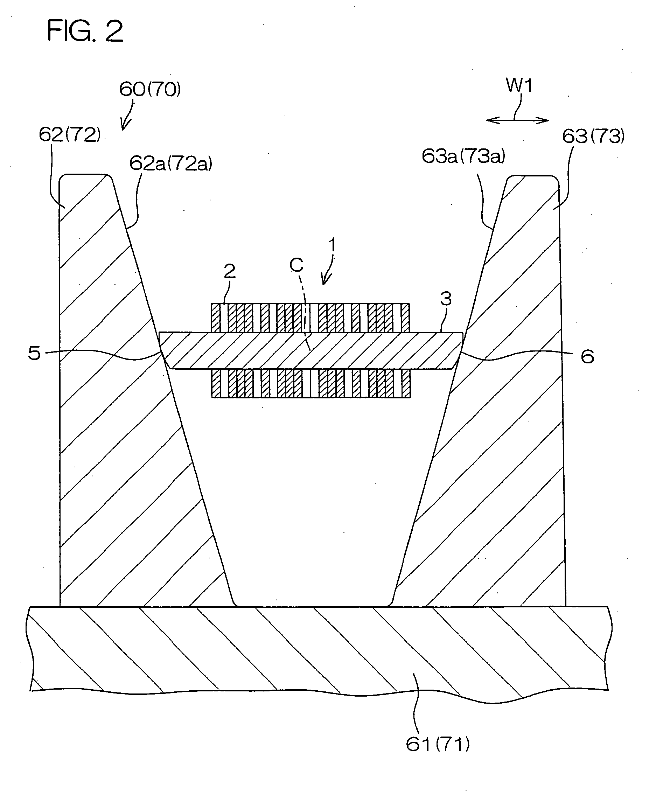

The drive pulley 60 and the driven pulley 70 comprise diameter-variable pulleys. Referring to FIG. 1 and FIG. 2, which is an enlarged cross section of a major portion of the CVT 100, the drive pulley 60 is attached to an input shaft 61, which is linked to the driving source of a vehicle to be able to transmit power, in a such a manner that they are allowed to rotate integrally. The drive pulley 60 includes a stationary sheave 62 and a movable sheave 63. The stationary sheave 62 and the movable sheave 63 respectively include a pair of sheave surfaces 62a and 63a that oppose each other. Each of the sheave surfaces 62a and 63a includes an inclined plane in the shape of a circular conical surface. A groove is defined between these sheave surfaces 62a and 63a, and the chain 1 is held by being caught in a space of this groove at a high pressure. Further, a hydraulic actuator (not shown) used to change the width of the groove is connected to the movable sheave 63, and the width of the groove is changed by moving the movable sheave 63 in the axial direction of the input shaft 61 (crosswise direction of FIG. 2) during shifting. This causes the chain 1 to move in the radial direction of the input shaft 61 (vertical direction of FIG. 2), which enables the effective radius of the drive pulley 60 for the chain 1 (equivalent to the winding radius of the chain 1) to be changed. Referring to FIG. 2, reference numerals in parentheses denote portions of the driven pulley 70 corresponding to those of the drive pulley 60. As are shown in FIG. 1 and FIG. 2, the driven pulley 70 is attached to an output shaft 71, which is linked to the drive wheel (not shown) to be able to transmit power, in a such a manner that they are allowed to rotate integrally. As with the drive pulley 60, it includes a stationary sheave 73 and a movable sheave 72 respectively having a pair of sheave surfaces 73a and 72a that oppose each other and define a groove in which the chain 1 is caught at a high pressure.

As with the movable sheave 63 of the drive pulley 60, a hydraulic actuator (not shown) is connected to the movable sheave 72 of the driven pulley 70, and the width of the groove is changed by moving the movable sheave 72 during shifting. This causes the chain 1 to move, which enables the effective radius of the driven pulley 70 for the chain 1 (equivalent to a winding radius of the chain 1) to be changed.

The CVT 100 is able to shift continuously, for example, as follows. That is, in a case where the speed of rotations of the output shaft 71 is reduced, the width of the groove of the drive pulley 60 is increased by moving the movable sheave 63. This allows the power transmission surfaces 5 and 6 at the both ends of a first pin 3 of the chain 1 to move toward the inner periphery in the radius direction of the sheave surfaces 62a and 63a (downward direction of FIG. 2) while they are coming into sliding contact with the circular-conical sheave surfaces 62a and 63a under the boundary lubrication condition. The effective radius of the drive pulley 60 for the chain 1 is thus reduced.

Meanwhile, the driven pulley 70 reduces the width of the groove by moving the movable sheave 73. This allows the power transmission surfaces 5 and 6 of the first pin 3 of the chain 1 to move toward the outer periphery in the radius direction of the sheave surfaces 72a and 73a (upward direction of FIG. 2) while they are coming into sliding contact with the circular-conical surfaces 72a and 73a under the boundary lubrication condition. The effective radius of the driven pulley 70 for the chain 1 is thus increased.

Conversely, in a case where the speed of rotations of the output shaft 71 is increased, the width of the groove of the drive pulley 60 is reduced by moving the movable sheave 63. This allows the power transmission surfaces 5 and 6 of the first pin 3 of the chain 1 to move toward the outer periphery in the radius direction of the sheave surfaces 62a and 63a while they are coming into sliding contact with the circular-conical sheave surfaces 62a and 63a under the boundary lubrication condition. The effective radius of the drive pulley 60 for the chain 1 is thus increased. Meanwhile, the driven pulley 70 increases the width of the groove by moving the movable sheave 73. This allows the power transmission surfaces 5 and 6 of the first pin 3 of the chain 1 to move toward the inner periphery in the radius direction of the sheave surfaces 72a and 73a while they are coming into sliding contact with the circular-conical surfaces 72a and 73a under the boundary lubrication condition. The effective radius of the driven pulley 70 for the chain 1 is thus reduced.

The boundary lubrication condition referred to herein means a lubrication state in which a part within the contact surface is a fine protrusion that comes into direct contact with the counterpart while the rest of the contact surface comes into contact with the counterpart via a film of lubrication oil. ,

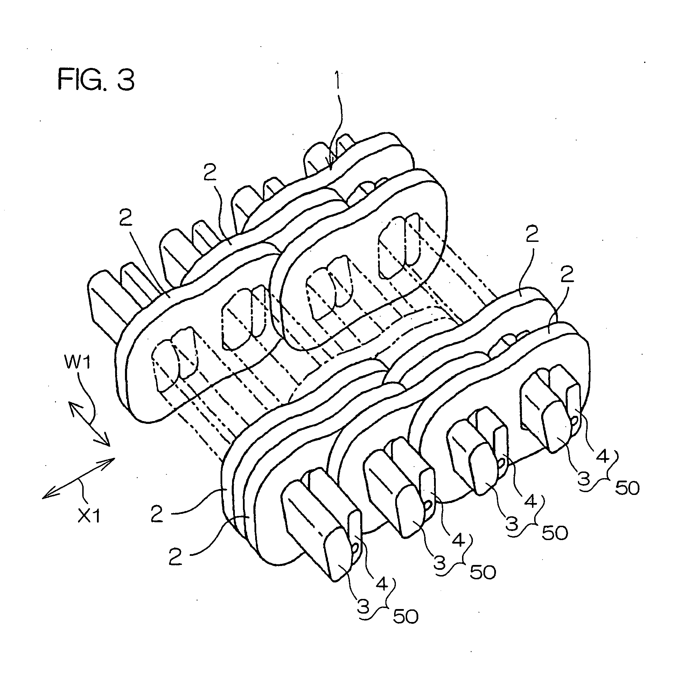

FIG. 3 is a perspective view schematically showing the configuration of a major portion of the chain 1. Referring to FIG. 3, the chain 1 includes plate-shaped links 2 aligned in a plurality of lines, and a plurality of connecting members 50 that link corresponding links 2 to one another. Each connecting member 50 includes a first driving pin 3 as a first power transmission member and a second driving pin 4 as a second power transmission member. In association with bending of the chain 1, either one of the first and second driving pins 3 and 4 moves relatively with respect to the other driving pin while coming into contact with the other driving pin in a contact state including at least one of rolling contact and sliding contact.

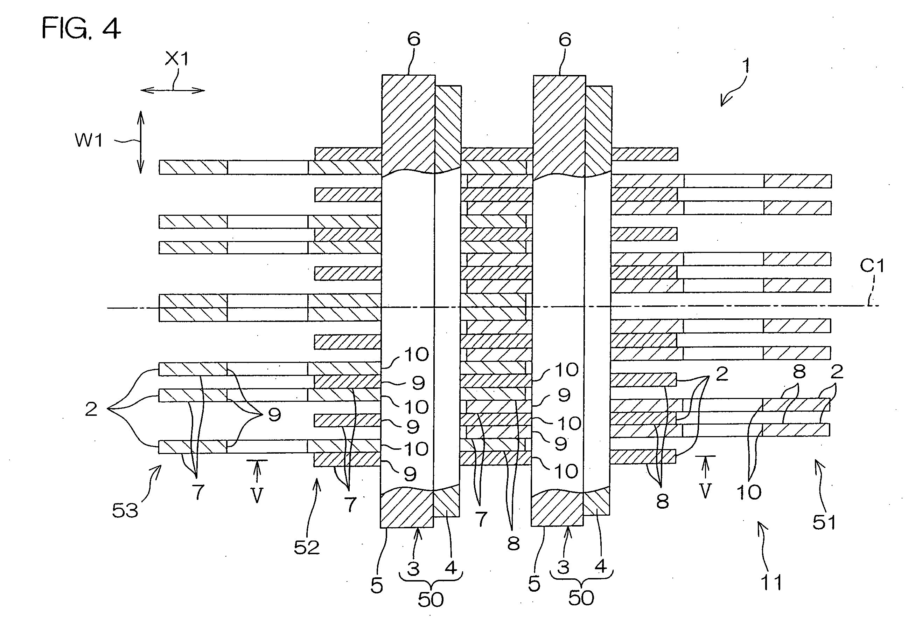

FIG. 4 is a cross section of the major portion of the chain 1. Referring to FIG. 4, the chain 1 includes a plurality of link units aligned in the traveling direction X1 of chain. In FIG. 4, of these link units, a first link unit 51, a second link unit 52, and a third link unit 53 are shown. These first, second, and third link units 51, 52, and 53 constitute a module 11 for the chain 1. Each of the link units 51, 52, and 53 includes a plurality of links 2 aligned in the width direction W1 of chain, orthogonal to the traveling direction X1 of chain.

A pair of end portions of the first driving pin 3 protrude respectively in the width direction W1 of chain, from a pair of the links 2 disposed at the outermost position of the chain 1 in the width direction W1 of chain. A pair of power transmission surfaces 5 and 6 that are brought into contact with the sheave surfaces 62a, 63a, 72a, and 73a are respectively provided on a pair of end faces of the first driving pin 3. Because the first driving pin 3 directly contributes to power transmission using its power transmission surfaces 5 and 6, it is made of a high-strength material, such as bearing steel (for example, SUJ2).

Meanwhile, as is shown in FIG. 4, the second driving pin 4 (referred to also as the strip or interpiece) is a rod-shaped body or a plate-shaped body formed to be slightly shorter than the first pin 3 to avoid contact with the sheave surfaces 62a, 63a, 72a, and 73a.

Within the same link unit 51, 52, or 53, the positions of the plurality of links 2 in the traveling direction X1 of chain identical with each other (being aligned). The corresponding links 2 of the corresponding link units 51, 52, and 53 are linked to one another using the corresponding connecting members 50 (that is, the first and second driving pins 3 and 4).

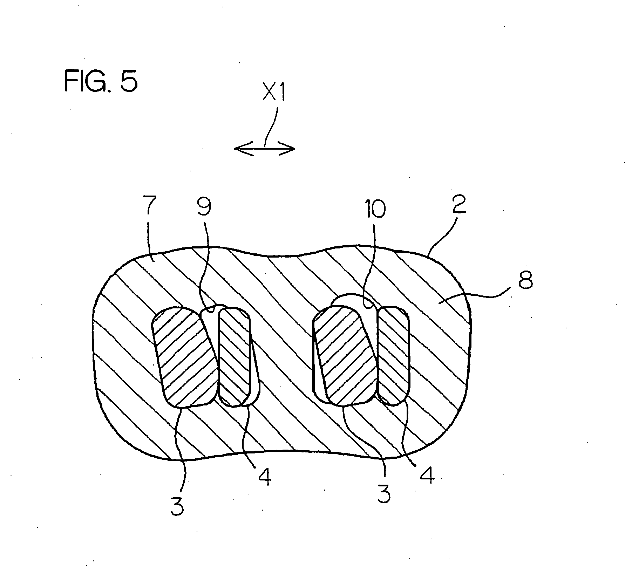

To be more concrete, as are shown in FIG. 4 and FIG. 5, which is a cross section taken along the line V-V of FIG. 4, each link 2 includes a front end portion 7 and a rear end portion 8 serving as a pair of end portions aligned at the front and back in the traveling direction X1 of chain and a front through-hole 9 as a first through-hole and a rear through-hole 10 as a second through-hole are made in the end portions 7 and 8, respectively. The respective links 2 have almost the same thickness.

Referring to FIG. 4, the front through-hole 9 in the link 2 of the first link unit 51 and the rear through-hole 10 in the link 2 of the second link unit 52 correspond to each other and are aligned in the width direction W1 of chain. The links 2 of the first and second link units 51 and 52 are linked to one another in a manner so as to enable bending, by the first and second driving pins 3 and 4 that are inserted through these corresponding through-holes 9 and 10.

The first driving pin 3 is fixed by being press-fit into the front through-hole 9 in the corresponding link 2, which limits its relative rotations with respect to this link 2, and at the same time it is fit into the rear through-hole 10 in the corresponding link 2 while leaving a fine space, for example, by loose fit, which enables its relative movements with respect to this link 2.

The first driving pin 3 is, for example, fixed by being press-fit into the front through-hole 9 in each link 2 of the first link unit 51 so that the relative rotations with respect to each link 2 of the first link unit 51 are limited, while at the same time, it is loosely fit into the rear through-hole 10 in each link 2 of the second link unit 52 so that the relative movements with respect to each link 2 of the second link unit 52 are allowed.

Likewise, the front through-hole 9 in the link 2 of the second link unit 52 and the rear through-hole 10 in the link 2 of the third link unit 53 correspond to each other and are aligned in the width direction W1 of chain. The links 2 of the second and third link units 52 and 53 are linked to one another by the first driving pin 3 that is inserted through these corresponding through-holes 9 and 10. In this case, the first driving pin 3 is not only fixed by being press-fit into the front through-hole 9 in each link 2 of the second link unit 52, but also loosely fit into the rear through-hole 10 in each link 2 of the third link unit 53.

The second driving pin 4 is fixed by being press-fit into the rear through-hole 10 in the corresponding link 2, which limits its relative rotations with respect to this link 2, and at the same time, it is loosely fit into the front through-hole 9 in the corresponding link 2 while leaving a fine space, for example, by loose fit, which enables its relative movements with respect to this link 2.

The second driving pin 4 is, for example, loosely fit into the front through-hole 9 in each link 2 of the first link unit 51 so that the relative movements with respect to each link 2 of the first link unit 51 are allowed, and at the same time it is fixed by being press-fit into the rear through-hole 10 in each link 2 of the second link unit 52 so that the relative rotations with respect to each link 2 of the second link unit 52 are limited.

Likewise, the second driving pin 4 is loosely fit into the front through-hole 9 in each link 2 of the second link unit 52, which allows its relative movements with respect to each link 2 of the second link unit 52, and at the same time it is fixed by being press-fit into the rear through-hole 10 in each link 2 of the third link unit 53, which limits its relative rotations with respect to each link 2 of the third link unit 53.

As described above, the module 11 for the endless chain 1 is formed by combining three link units, that is, the first link unit 51, the second link unit 52, and the third link unit 53. The plurality of modules 11 are disposed in the traveling direction X1 of chain (FIG. 2 shows only the one module 11). The corresponding links 2 of the corresponding link units 51, 52, and 53 in the two modules 11 adjacent to each other in the traveling direction X1 of chain are connected to one another. The modules 11 are linked to each other one by one, and the chain 1 of an endless shape as a whole is thus formed.

To be more concrete, the one module 11 is disposed adjacently to another module 11 on one side (on the left of FIG. 2) in the traveling direction X1 of chain in such a manner that the front through-hole 9 in each link 2 of the third link unit 53 of the one module 11 corresponds to the rear through-hole 10 (not shown) in each link 2 of the first link unit 51 of the another module 11. The first driving pin 3 is then fixed by being press-fit into the front through-hole 9 in each link 2 of the corresponding third link unit 53, and at the same time it is loosely fit into the rear through-hole 10 in each link 2 of the corresponding first link unit 51. Further, the second driving pin 4 is loosely fit into these front through-holes 9, and at the same time it is fixed by being press-fit into these rear through-holes 10.

Further, the one module 11 is disposed adjacently to still another module 11 on the other side (on the right of FIG. 2) in the traveling direction X1 of chain in such a manner that the rear through-hole 10 in each link 2 of the first link unit 51 of the one module 11 corresponds to the front through-hole 9 (not shown) in each link 2 of the third link unit 53 of the still anther module 11. The first driving pin 3 is then loosely fit into the rear through-hole 10 in each link 2 of the corresponding first link unit 51, and at the same time it is fit by being press-fit into the front through-hole 9 in each link 2 of the corresponding third link unit 53. Further, the second driving pin 4 is fit by being press-fit into the rear through-hole 10, and at the same time it is loosely fit into the front through-hole 9.

The configuration described above allows the second driving pin 4 to come into rolling and sliding contact with the corresponding first driving pin 3 that is disposed adjacently in the traveling direction X1 of chain while the chain is being driven. Consequently, the first driving pin 3 hardly rotates with respect to the sheave surfaces 62a and 63a and the sheave surfaces 72a and 73a of the pulleys 60 and 70, respectively. It is thus possible to ensure a high power transmission efficiency by reducing a frictional loss. The rolling and sliding contact mentioned above means contact including at least one of rolling contact and sliding contact.

This embodiment is characterized in that the number of the links 2 in each of the first link unit 51, the second link unit 52, and the third link unit 53 is equal and an even number (eight in this embodiment).

Further, in each of the link units 51, 52, and 53, the links 2 are disposed symmetrically about a center position C1 of the chain 1 in the width direction W1 of chain and they are disposed in different disposition patterns. To be more specific, the center position C1 of chain 1 in the width direction W1 of chain corresponds to a plane that is orthogonal to the axial lines of the first and second driving pins 3 and 4 and extends in the traveling direction X1 of chain.

The links 2 of the first link unit 51 are disposed at the second, fourth, eighth, and tenth positions from the center position C1 in the width direction W1 of chain. The links 2 of the second link unit 52 are disposed at the third, sixth, ninth, and twelfth positions from the center position C1 in the width direction W1 of chain. The links 2 of the third link unit 53 are disposed at the first, fifth, seventh, and the eleventh positions from the center position C1 in the width direction W1 of chain. The link 2 closest to the center position C1, that is, the link 2 of the third link unit 53 at the center portion in the width direction W1 of chain is disposed so as not to intersect with the center position C1.

According to the configuration as described above, the third link unit 53 includes two links 2 disposed to be stacked on top of each other so as to come into contact with each other at the center position C1 in the width direction W1 of chain. These two links 2 come into contact with each other with the center position C1 in between. Further, the second link unit 52 includes a pair of links 2 disposed, respectively, at a pair of end portions (the outer most portions) of the chain 1 in the width direction W1 of chain. The center position C1 corresponds to the center position between the pair of these links 2 disposed at the outermost portions.

The modules 11 may comprise the links 2 that are disposed to repeat a specific disposition pattern in the width direction W1 of chain. To be more concrete, the module 11 has a disposition pattern that the link 2 of the third link unit 53, the link 2 of the first link unit 51, the link 2 of the second link unit 52, the link 2 of the first link unit 51, the link 2 of the third link unit 53, and the link 2 of the second link unit 52 are aligned sequentially to the outer side from the center position C1 in the width direction W1 of chain. In the module 11, this disposition pattern is repeated from the center position C1 to the outer side in the width direction W1 of chain.

According to the configuration of this embodiment, because the number of the links 2 in each of the first through third link units 51 through 53 is made equal, stress induced on the links 2 of each of the first through third link units 51 through 53 can be almost uniform, which can in turn prevent the occurrence of bias of stress among the first through third link units 51 through 53. It is thus possible to enhance the strength and the durability markedly. Moreover, because the number of the links 2 in each of the first through third link units 51 through 53 is made equal, no link in a particular link unit will protrude in the width direction W1 of chain and a reduction in size of the device can be thus achieved.

Furthermore, in a conventional configuration in the related art where the numbers of links are not equal, for example, where the second link unit including nine links, and first and third link units each including eight links are provided and a single link in the second link unit is disposed at the center of the chain in the width direction of chain, the chain 1 of this embodiment can be achieved by merely omitting the single link at the center of the second link unit.

In another conventional configuration in the related art where the second link unit including ten links and the first and third link units each including eight links are provided, the chain 1 of this embodiment can be achieved by merely make the links of the second line eight. To be more concrete, the chain 1 of this embodiment can be achieved by omitting, for example, two links in the second link unit at the center in the width direction of chain in the chain of the another conventional configuration in the related art.

As described above, because the chain 1 of this embodiment can be achieved by the configuration as simple as omitting a part of links in a part of link units from the chain of a conventional configuration in the related art, the cost can be lowered. Moreover, even when each link 2 of the chain 1 of this embodiment is made thicker than each link of the chain of a conventional configuration in the related art, it is possible to prevent the chain 1 of this embodiment from becoming wider than the chain of a conventional configuration in the related art. The chain 1 of this embodiment can thus achieve both a reduction in size and higher strength simultaneously.

Further, because the third link unit 53 includes the two links 2 disposed to be stacked on top of each other so as to come into contact with each other at the center position C1 in the width direction W1 of chain, it is possible to increase the strength and the like at the center in the width direction W1 of chain.

Further, the links 2 of each of the first through third lines 51 through 53 are disposed symmetrically about the center position C1 in the width direction W1 of chain, the load balance can be uniform in the width direction W1 of chain, which can in turn further enhance the strength or the like.

In addition, as the first driving pin 3 and the second driving pin 4 move relatively while coming into rolling and sliding contact with each other, bending of the link units adjacent to each other in the traveling direction X1 of chain is enabled. Hence, for example, when the first driving pin 3 transmits power by engaging with an object to which power is to be transmitted, such as a pulley, the first driving pin 3 hardly rotates with respect to the object to which power is to be transmitted since the second driving pin 4 moves while coming into rolling and sliding contact with this first driving pin 3. It is thus possible to ensure a high power transmission efficiency by reducing a frictional loss.

In each of the embodiments above, the number of the links 2 in each of the link units 51, 52, and 53 may be two, four, six, or ten or more.

Further, the module 11 may comprise two link units, for example, any two of the first, second, and third link units 51, 52, and 53, or it may comprise four or more link units.

Further, the respective links 2 of the first, second, and third link units 51, 52, and 53 may be disposed in such a manner that only a part of them are plane symmetric about the center position C1. Not all the links 2 of the first, second, and third link units 51, 52, and 53 are necessarily disposed plane symmetrically about the center position C1.

The link unit that has the two links 2 disposed to be stacked on top of each other so as to come into contact with each other at the center position C1 of the chain 1 in the width direction W1 of chain is not limited to the third link unit 53, and it may be the first link unit 51 or the second link unit 52.

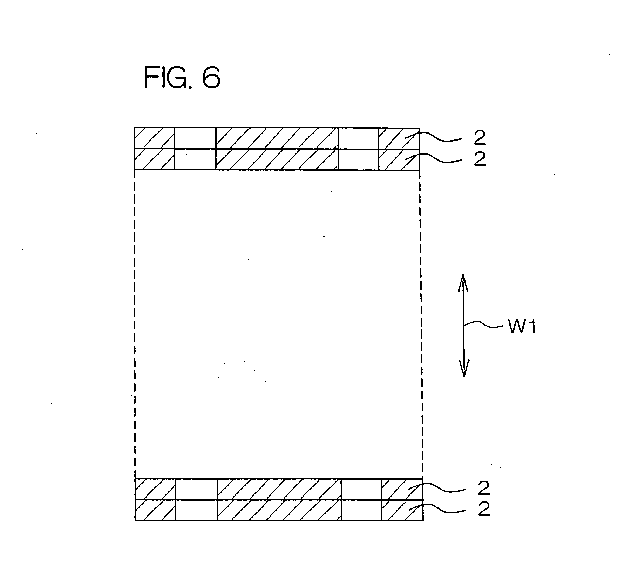

Alternatively, two links of one link unit may be disposed to be stacked on top of each other at a position remote from the center position C1 of the chain 1 in the width direction W1 of chain. For example, as shown in Fig. 6, at least one of the first, second, and third link units 51, 52, and 53 may include two links 2 that are disposed to be stacked on top of each other, respectively, at a pair of end portions of the chain 1 in the width direction W1 of chain. In this case, it is possible to increase the strength at the both end portions of the chain 1 in the width direction W1 of chain.

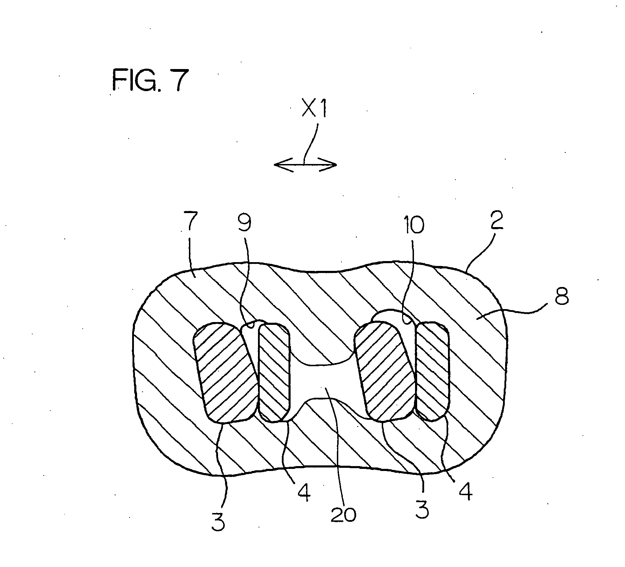

As is shown in FIG. 7, a communication groove 20 that allows the front through-hole 9 and the rear through-hole 10 to communicate with each other may be made in the link 2. In this case, because the link 2 readily undergoes elastic deformation, it is possible to suppress stress from concentrating at the peripheral edges of the respective through-holes 9 and 10. It is thus possible to enhance the durability of the link 2, and hence the durability of the chain 1.

Further, each embodiment above shows the case where power is transmitted as the first driving pin 3 alone comes into contact with the sheave surfaces 62a and 63a or the sheave surfaces 72a and 73a. However, the present invention is not limited to this case, and it can be applied to a case where power is transmitted as both the first and second driving pins 3 and 4 come into contact with the sheave surfaces 62a and 63a or the sheave surfaces 72a and 73a.

As has been described, according to this embodiment, it is possible to achieve a power transmission device that is compact, and yet excels not only in durability but also in a power transmission efficiency and is therefore capable of transmitting extremely large power.

It should be appreciated that the power transmission device of the present invention is not limited to an embodiment in which the widths of the grooves of both the drive pulley 60 and the driven pulley 70 are varied, and it may be practiced in an embodiment in which the width of the groove of either one of the pulleys alone is varied while the width of the groove of the other is fixed. Further, the embodiment in which the widths of grooves are varied continuously (in a stepless manner) has been described. However, the present invention can be applied to other power transmission devices in which the widths of groove are varied step by step or the widths of groove are fixed (no shifting) .

In a case where the chain 1 is viewed from the side, the trajectory of the contact point of the first and second driving pins 3 and 4 when the chain 1 engages with the respective pulleys 60 and 70 may shape an almost involute curve. To be more concrete, the shape of the side cross section of the contact surface of the first driving pin 3 is shaped in an involute curve. Further, the side cross section of the contact surface of the second driving pin 4 is made into a linear shape. In short, the contact surface of the second driving pin 4 is made into a flat plane. In this case, because the chordal action of the chain 1 accompanying the traveling of the chain 1 is suppressed to the minimum, noises can be reduced markedly. It is therefore suitable to a CVT for an automobile to which quietness is required.

Further, a case where power is transmitted as the power transmission surfaces 5 and 6 (end faces) of the first driving pin 3 come into contact with the corresponding sheave surfaces 62a, 63a, 72a, and 73a has been described. However, a chain of another type provided with another power transmission member, for example, a power transmission block in which a power transmission surface is provided to a chain forming member, such as pins and links, may be used as well.

While the concrete embodiments of the present invention have been described in detail, modifications, alternations, and equivalents of the present invention readily occur to those skilled in the art who understand the content of the description above. It should be therefore appreciated that present invention covers the scope of claims and the scope of their equivalents.

This application corresponds to the prior Japanese Patent Application No. 2004-105933 filed with the Japanese Paten Office on March 31, 2004, the entire disclosure of which are incorporated herein by reference.

## Claims

1. A power transmission chain, comprising:
a plurality of link units aligned in a traveling direction of chain; and
a plurality of connecting members that link the plurality of link units to one another,
wherein:
each of the link units includes a plurality of links aligned in a width direction of chain that is orthogonal to the traveling direction of chain;
each of the connecting members includes first and second power transmission members;
either one of the first and second power transmission members moves relatively with respect to the other power transmission member accompanying bending of the chain while coming into contact with the other power transmission member in a contact state including at least one of rolling contact and sliding contact; and
the number of the links in each of the link units is equal and an even number.

2. The power transmission chain according to Claim 1, wherein:
at least one of the link units includes two links that are disposed to be stacked on each other so as to come into contact with each other.

3. The power transmission chain according to Claim 1, wherein:
at least one of the link units includes two links that are disposed to be stacked on each other so as to come into contact with each other at a center position of the chain in the width direction of chain.

4. The power transmission chain according to Claim 1, wherein:
at least one of the link units includes two pairs of links disposed, respectively, at a pair of end portions of the chain in the width direction of chain, and each of the pairs of links are stacked on each other so as to come into contact with each other.

5. The power transmission chain according to Claim 1, wherein:
the links of at least one of the link units are disposed symmetrically about a center position of the chain in the width direction of chain.

6. The power transmission chain according to Claim 1, wherein:
each of the links of each of the link units includes first and second through-holes for corresponding connecting members to be inserted therein; and
the first and second through-holes in each of the links are aligned in the traveling direction of chain.

7. The power transmission chain according to Claim 6, wherein:
a corresponding first power transmission member is fit into the first through-hole in each of the links in a manner so as to enable relative movements and a corresponding second power transmission member is fit therein in a manner so as to inhibit relative movements; and
the corresponding second power transmission member is fit into the second through-hole in each of the links in a manner so as to enable relative movements and the corresponding first power transmission member is fit therein in a manner so as to inhibit relative movements.

8. The power transmission chain according to Claim 6, wherein:
each of the links of each of the link units includes a communication groove that allows the first and second through-holes to communicate with each other.

9. The power transmission chain according to Claim 1, wherein:
movement trajectory of a contact point of the first and second power transmission members of each of the connecting members shapes an involute curve.

10. A power transmission device, comprising:
a pair of pulleys each having a pair of circular conical sheave surfaces that oppose each other,
wherein power is transmitted between the pair of pulleys via the power transmission chain according to any one of Claims 1 through 9.
